# EUROPEAN PATENT APPLICATION

(11) **EP 3 062 071 A1**
(43) Date of publication of application: **31.08.2016**
(21) Application number: 15290044.5
(22) Date of filing: 26.02.2015
(51) Int. Cl.: G01F 23/22, G01F 22/00, A47G 19/22, G01J 5/10

(54) **A cup holder and the related method for identifying the fill level of a cup**

(71) Applicant: ALCATEL LUCENT, 92100 Boulogne-Billancourt (FR)
(72) Inventor: Liekens, Werner Mario, 2018 Antwerpen (BE); De Loof, Jourik, 2018 Antwerpen (BE)
(74) Representative: Plas, Axel Ivo Michel

(57) **Abstract**

A cup holder (10) for holding a cup (20) with fluids (1), said cup holder (10) comprising:
- an infra-red temperature sensor (11), adapted to measure the temperature (100) of said cup (20) and to generate a temperature signal (3) comprising information indicative for said temperature (100) over a time period; and
- a data processing system (12) comprising:
- a temperature signal receiver (121), adapted to receive said temperature signal (3) from said infra-red temperature sensor (11);
- a slope calculator unit (122), adapted to calculate a derivative (30) of said temperature signal (3), thereby generating a slope (110) of said temperature (100); and
- a level determining module (123), adapted to determine from said slope (110) a fill level (4) of said cup (20).

## Description

### Technical Field

The present invention relates to the field of automatically determining if a cup adapted to hold hot and cold fluids is empty or not.

### Background

A fill level of a fluid in a cup is understood as the volume of fluid present in the cup at a given instant in time. Determining a fill level of a fluid in a cup is understood as monitoring over time how much fluid is present in this cup and thereby as being able to determine if there still is some fluid in the cup or if the cup is empty. Monitoring the fill level of a fluid in the cup over a time period further allows to precisely estimate and determine how much fluid is left in the cup at each instant of the time period, i.e. how large the volume of the fluid present in the cup still is at each instant of the time period.

The current solutions to automatically determine a fill level of a cup often rely on the use of pressure sensors and/or float sensors. Pressure sensors and/or float sensors can be implemented on a manufactured chip that may for instance be integrated in the cup itself or that may be positioned outside and/or in the cup. For example, pressure sensors and/or float sensors can be directly positioned in contact with the fluid in the cup. This threatens the integrity of the sensors and thereby reduces their operation lifetime, which increases their implementation costs. But it also increases the complexity of the design of the cup as the sensors must be designed in order to remain robust in time. Measuring a fill level of a fluid in a cup by directly contacting the fluid itself is also an intrusive way that puts the quality of the fluid in the cup in jeopardy. Additionally, the combination of several sensors on the same manufactured chip makes the design of the chip complex and leads to a high total power consumption of the manufactured chip. This results in high manufacturing costs due to the presence of several sensors on a single chip, but also results in high maintenance costs as several sensors of the chip simultaneously require biasing.

### Summary of the Invention

It is an objective to disclose a system and the related method that overcome the above identified shortcomings of existing solutions. More particularly, it is an objective to disclose such a device and method for identifying the fill level of a cup and thereby determining when the cup is empty, while considerably reducing the number of sensors required to identify the fill level, thereby reducing the complexity of the circuit board used for detection and reducing its power consumption, and consequently reducing the costs associated with its implementation. It is a further objective to disclose such a device and method that collect relevant and valuable information on the user of the cup.

According to embodiments of the present invention, the above defined objectives are realized by a cup holder for holding a cup with fluids, the cup holder comprising:
- an infra-red temperature sensor, adapted to measure the temperature of the cup and to generate a temperature signal comprising information indicative for the temperature over a time period; and
- a data processing system comprising:
   - a temperature signal receiver, adapted to receive the temperature signal from the infra-red temperature sensor;
   - a slope calculator unit, adapted to calculate a derivative of the temperature signal, thereby generating a slope of the temperature; and
   - a level determining module, adapted to determine from the slope a fill level of the cup.

In accordance with the present invention, a cup holder holding a cup is adapted to determine from temperature measurements performed by one infra-red temperature sensor if the cup holds fluids or if the cup is empty. The fill level of a cup is understood in the context of the present invention as an indication of whether the cup is empty or not. The cup holder is further adapted to detect the time instant at which a cup, which was holding fluids at a previous time instant, is empty. One infra-red temperature sensor measures the temperature of the cup with a sampling period. An infra-red temperature sensor is a thermometer which infers temperature from a portion of the thermal radiation, also referred to as blackbody radiation, emitted by the cup being measured. The infra-red temperature sensor of the cup holder generates with the same sampling period a temperature signal comprising information indicative for the temperature of the cup. In accordance with the present invention, the temperature signal comprises the value of the temperature of the cup at the time instant of the most recent temperature measurement as well as the value of the temperature of the cup at a previous time instant, distant in time from the time instant of a sampling period. Alternatively, the temperature signal comprises the values of the temperature of the cup at different respective time instants defined in accordance with the sampling period and over a time period larger than the sampling period. The data processing system of the cup holder is adapted to calculate with a calculation periodicity a derivative of the temperature signal over time. In other words, the data processing system generates the slope of the temperature signal overtime with a calculation periodicity. The slope of the temperature signal describes both the direction and the steepness of the temperature signal. With the calculation periodicity, the data processing system calculates the absolute value of the numerical value of the generated slope and compares the absolute value of the generated slope to a predetermined threshold. When the absolute value of the slope is equal to or larger than the predetermined threshold, the data processing system determines the cup is empty. This predetermined threshold is pre-calibrated before the infra-red temperature sensor measures the temperature of the cup under study and generates the temperature signal. The predetermined threshold depends on physical parameters of one or more materials from which the cup is made, such as parameters related to conduction transfer modes, for example the thermal conductivity of one or more materials from which the cup is made.

In accordance with the present invention, the cup holder comprises only one infra-red temperature sensor and the cup holder is able to determine from the temperature measurement of this single infra-red temperature sensor if the corresponding cup held in the cup holder is empty or not. The use of only one infra-red temperature sensor considerably reduces the complexity of the design of the cup holder, which therefore considerably reduces the complexity of its manufacturing. Relying on only one infra-red temperature sensor to determine if a cup is empty or not indeed minimizes the costs associated with the manufacturing of the circuit board of the cup holder. This further minimizes the physical size of the circuit board and therefore increases the flexibility of the integration of the circuit board in cup holders and opens the door to a universal design for the cup holder that could be adapted on any type of cups. Additionally, the power consumption of the cup holder is considerably reduced as only one infra-red temperature sensor and the data processing system need biasing. This further reduces the costs associated with the operation of the circuit board of the cup holder and increases its efficiency. Additionally, the infra-red temperature sensor of the cup holder measures the temperature of the cup, not of the fluids held in the cup. This is a non-intrusive way to determine if the cup is empty or not. It further ensures the infra-red temperature sensor is not damaged by the fluids held in the cup, which reduces the costs associated with the maintenance of the circuit board of the cup holder, and ensures the simplicity of the design as the infra-red temperature sensor does not require to be robust in order to withstand repetitive contact with fluids.

According to an optional embodiment, the level determining module is further adapted to determine that the cup is empty when the absolute value of the slope is changing with an amount equal to or larger than a predetermined threshold.

In accordance with the present invention, the slope is generated by calculating the ratio of the difference between two consecutive measured values of temperature of the cup over the difference between the two corresponding consecutive measured time instants at which the two values of temperature were measured.

In accordance with the present invention, the cup holder holding a cup is adapted to determine if the cup holds fluids or if the cup is empty, independently from the temperature of the fluid held in the cup. In other words, the cup is adapted to hold warm fluids and cold fluids. When warm fluids are poured into the cup, the temperature of the cup increases from an initial value to a value larger than the initial value. When no more warm fluids are added to the cup, the temperature of the cup decreases, due to the cooling of the warm fluids held in the cup, and/or due to the fact that a user of the cup drinks the warm fluids from the cup. The infra-red temperature sensor measures the temperature of the cup with a sampling period and generates a temperature signal with the same sampling period. The data processing system calculates a slope of the temperature signal with a calculation periodicity. To the cooling of the warm fluids held in the cup is associated a negative numerical value of the slope. Every time a user of the cup drinks fluids from the cup, the volume of the warm fluids in the cup decreases. As a consequence of the normal cooling of the warm fluids and/or of the consumption of the warm fluids by a user of the cup, the temperature of the remaining volume of the fluids in the cup decreases. In other words, the absolute value of the numerical value of the slope of the temperature signal increases when the volume of warm fluids cools down, due to a normal cooling of the warm fluids and/or due to the consumption of the warm fluids of the cup by a user of the cup. When the absolute value of the numerical value of the slope increases by an amount equal to or larger than a predetermined threshold, the level determining module determines that the cup is empty.

When cold fluids are poured into the cup, the temperature of the cup decreases from an initial value to a value lower than the initial value. When no more cold fluids are added to the cup, the temperature of the cup increases, due to the warming up of the cold fluids held in the cup, and/or due to the fact that a user of the cup drinks the cold fluids from the cup. The infra-red temperature sensor measures the temperature of the cup with a sampling period and generates a temperature signal with the same sampling period. The data processing system calculates a slope of the temperature signal with a calculation periodicity. To the warming up of the cold fluids held in the cup is associated a positive numerical value of the slope. Every time a user of the cup drinks fluids from the cup, the volume of the cold fluids in the cup decreases. As a consequence of the normal warming up of the cold fluids and/or of the consumption of the cold fluids by a user of the cup, the temperature of the remaining volume of the fluids in the cup increases. In other words, the absolute value of the numerical value of the slope of the temperature signal increases when the volume of cold fluids warms up, due to a normal warming up of the cold fluids and/or due to the consumption of the cold fluids of the cup by a user of the cup. When the absolute value of the numerical value of the slope increases by an amount equal to or larger than a predetermined threshold, the level determining module determines that the cup is empty.

The predetermined threshold depends on physical parameters of one or more materials from which the cup is made, such as parameters related to conduction transfer modes, for example the thermal conductivity of one or more materials from which the cup is made, or the thermal resistivity of one or more materials from which the cup is made. Heat transfer occurs at a higher rate across materials of high thermal conductivity than across materials of low thermal conductivity. In other words, in normal conditions, the temperature of the fluids held in the cup will change faster for a cup made out of a material with a high thermal conductivity than for a cup made out of a material with a low thermal conductivity. For example, the thermal conductivity of steel is equal to 16W.m⁻¹.K⁻¹, while the thermal conductivity of glass is equal to 0.8W.m⁻¹.K⁻¹ and the thermal conductivity of ceramics is equal to 1.5W.m⁻¹.K⁻¹. Thus, a warm fluid loses heat faster in a metal cup than in a similar cup made out of glass, and a warm fluid loses heat faster in a glass cup than in a similar cup made out of ceramics. In accordance with the present invention, the predetermined threshold is determined by calibration during preliminary tests performed for each type of material of the cup. In other words, to each material of cups is associated a predetermined threshold. The predetermined threshold is for example equal to the amount from which the numerical value of the slope changes between the moment when the cup is visually identified as holding fluids and the moment when the cup is visually identified as empty.

According to an optional embodiment, the infra-red temperature sensor is adapted to measure the temperature of the cup with a sampling period comprised between 500 milliseconds and 10 seconds.

This way, the temperature measurement performed by the infra-red temperature is updated every sampling period. This ensures the cup holder determines if the cup holds fluids or is empty in an accurate manner. Indeed, the smaller the sampling period, the more temperature points are available to the slope calculator unit to generate the slope of the temperature signal and the more accurate the calculation of the slope is. This way, small variations in temperature of the cup may for example be associated to a consumption of fluids by a user of the cup. In accordance with the present invention, the sampling period is comprised between 500 milliseconds and 10 seconds, preferably equal to 1 second.

According to an optional embodiment, the slope calculator unit is adapted to calculate a derivative of the temperature signal with a calculation periodicity comprised between 500 milliseconds and 10 seconds.

This way, the calculation of the derivative of the temperature signal performed by the slope calculator unit is updated every calculation periodicity. This ensures the cup holder determines if the cup holds fluids or is empty in an efficient manner. Indeed, the smaller the calculation period, the more numerical values of the slope are available to the level determining module and the faster the level determining module can determine if the cup is empty. In accordance with the present invention, the calculation periodicity is comprised between 500 milliseconds and 10 seconds, preferably equal to 1 second. This way, the level determining module can instantly determine if the cup is empty.

According to an optional embodiment, the data processing system further comprises a storing unit adapted to store:
- the temperature of the cup in a temperature table with the sampling period; and
- the slope of the temperature in a slope table with the calculation periodicity.

This way, the measured values of the temperature of the cup and the corresponding numerical values of the slope of the temperature are stored respectively in a temperature table and a slope table and can be retrieved from the storing unit when necessary. In accordance with the present invention, the slope of the temperature is generated by calculating the ratio of the difference between two consecutive measured values of temperature of the cup over the difference between the two corresponding consecutive measured time instants at which the two values of temperature were measured. In other words, at least two values of temperature must be stored in the temperature table so that a slope of the temperature calculated. Alternatively, one value of temperature is stored in the temperature table and is retrieved by the slope calculating unit to calculate a slope from the last measured value of the temperature of the cup and from the stored value of the temperature of the cup. When the slope is calculated, the stored value of the temperature of the cup is deleted from the temperature table and the last measured value of temperature is stored in the temperature table. In accordance with the present invention, when the absolute value of the numerical value of the slope increases by an amount equal to or larger than a predetermined threshold, the level determining module determines that the cup is empty. In other words, at least two numerical values of a slope of the temperature are compared to each other to identify if the slope of the temperature has changed by an amount equal to or larger than a predetermined threshold.

According to an optional embodiment:
- the storing unit is further adapted to store a predetermined table of threshold values; and
- the predetermined threshold is retrieved from the predetermined table.

This way, the use of the cup holder is made easy and flexible as the cup holder is compatible with a wide range of materials used to fabricate cups. Predetermined thresholds for each suitable types of cup materials are determined during a calibration phase are stored in a predetermined table of threshold values. In other words, in the predetermined table of threshold values, to each type of material is associated a predetermined threshold. The level determining unit then retrieves the predetermined threshold from the predetermined table corresponding to the material of the cup under measurement and compares the absolute value of the numerical value of the slope of the temperature to the predetermined threshold. Alternatively, a user of the cup holder may program the predetermined threshold in the cup holder as an input parameter for the level determining module.

According to an optional embodiment, the calculation periodicity and the sampling period are substantially equal.

This way, the cup holder efficiently determines if the cup it is holding is empty or not. Indeed, all the temperature measurements performed by the infra-red temperature sensor are used by the slope calculator unit to generate a slope and all the generated slopes are used by the level determining unit to determine if the cup is empty or not. The calculation periodicity and the sampling period may be synchronized to allow the calculation of a new slope for each new measurement of the temperature of the cup.

According to an optional embodiment, the cup holder comprises only one infra-red temperature sensor and no other sensor.

This way, the complexity of the design of the cup holder, the power consumption of the cup holder, the costs associated with the manufacturing and the operation and the maintenance of the cup holder are minimized. The cup holder then does not comprise any other sensor than the infra-red temperature sensor.

According to an optional embodiment, the cup holder further comprises:
- a position determining unit, adapted to determine a position of the cup holder and to generate a position signal; and
- a gyroscope, adapted to detect a movement of the cup holder and to generate a movement signal comprising information indicative for the movement.

This way, the cup holder provides relevant information over the user of the cup held by the cup holder. The position and/or the movement of the user can be directly measured by the cup holder and provide information about his behavior.

According to an optional embodiment, the cup holder further comprises a wireless transmitter, adapted to encode and transmit the fill level in a fill level signal.

This way, the cup holder is adapted to transmit the fill level of the cup to a receiver and thereby communicate on whether the cup it is holding is empty or not. This improves the efficiency of a third party, which is alerted of the fill level of the cup and may decide to fill the cup again with fluids. Additionally, the fill level signal transmitted by the cup holder can be stored and analyzed in order to identify a habit of consumption of a user of the cup.

According to an optional embodiment, the wireless transmitter is further adapted to encode and transmit the fill level signal, and/or the location signal, and/or the movement signal.

This way, the cup holder provides a wide range of relevant information over the user of the cup held by the cup holder.

According to an optional embodiment:
- the wireless transmitter is a Bluetooth low energy transmitter; and
- the fill level signal, and/or the location signal, and/or the movement signal comprise at least one Bluetooth low energy beacon with a universal unique identifier.

This way, the power consumption of the cup holder is optimized as the transmission of the fill level signal, and/or the location signal, and/or the movement signal is performed with Bluetooth low energy. Additionally, the cup holder is made compatible with a wide range of receiver as it relies on a Bluetooth transmission. The use of a Bluetooth low energy beacon with a universal unique identifier also allows an identification of the user of the cup holder, and the customization of the signals transmitted by the cup holder. Alternatively, the cup holder may transmit the fill level signal, and/or the location signal, and/or the movement signal via Wi-Fi. Alternatively, the cup holder may transmit the location signal and/or the movement signal of the cup holder via Global Positioning System.

According to an optional embodiment, the cup holder is further adapted to be integrated in the cup.

This way, the minimization of the physical size of the circuit board increases the flexibility of the integration of the circuit board in cup holders. Additionally, the infra-red temperature sensor of the cup holder measures the temperature of the cup, not of the fluids held in the cup. This is a non-intrusive way to determine if the cup is empty or not. It further ensures the infra-red temperature sensor is not damaged by the fluids held in the cup, which reduces the costs associated with the maintenance of the circuit board of the cup holder, and ensures the simplicity of the design as the infra-red temperature sensor does not require to be robust in order to withstand repetitive contact with fluids.

According to embodiments of the invention, there is provided a method for determining a fill level of a cup, the method comprising the steps of:
- measuring the temperature of the cup;
- generating a temperature signal containing information indicative for the temperature over a time period;
- calculating a derivative of the temperature signal, thereby generating a slope of said temperature; and
- determining the fill level of the cup from the slope.

In accordance with the present invention, it is possible to determine from temperature measurements performed by one infra-red temperature sensor if a cup holds fluids or if a cup is empty. The fill level of a cup is understood in the context of the present invention as an indication of whether the cup is empty or not. The time instant at which a cup, which was at a previous time instant holding fluids, is empty, can also be measured. The temperature of the cup is measured with a sampling period. A temperature signal comprising information indicative for the temperature of the cup is generated with the same sampling period. In accordance with the present invention, the temperature signal comprises the value of the temperature of the cup at the time instant of the most recent temperature measurement as well as the value of the temperature of the cup at a previous time instant, distant in time from the time instant of a sampling period. Alternatively, the temperature signal comprises the values of the temperature of the cup at different respective time instants defined in accordance with the sampling period and over a time period larger than the sampling period. A derivative of the temperature signal over time is calculated with a calculation periodicity. In other words, a slope of the temperature signal over time is generated with a calculation periodicity. The slope of the temperature signal describes both the direction and the steepness of the temperature signal. With the calculation periodicity, the absolute value of the numerical value of the generated slope is calculated and compared to a predetermined threshold. When the absolute value of the slope is equal to or larger than the predetermined threshold, the cup is determined as empty. This predetermined threshold is pre-calibrated before the temperature of the cup under study is measured and before the temperature signal is generated. The predetermined threshold depends on physical parameters of one or more materials from which the cup is made, such as parameters related to conduction transfer modes, for example the thermal conductivity of one or more materials from which the cup is made.

In accordance with the present invention, a single temperature sensor is needed to determine from the temperature measurement if the corresponding cup held in the cup holder is empty or not. The use of only one temperature sensor considerably reduces the complexity of the design of the cup holder, which therefore considerably reduces the complexity of its manufacturing. Relying on only one infra-temperature sensor to determine if a cup is empty or not indeed minimizes the costs associated with the manufacturing of the circuit board of the cup holder. This further minimizes the physical size of the circuit board and therefore increases the flexibility of the integration of the circuit board in cup holders and opens the door to a universal design for the cup holder that could be adapted on any type of cups. Additionally, the power consumption of the cup holder is considerably reduced as only one infra-red temperature sensor and the data processing system need biasing. This further reduces the costs associated with the operation of the circuit board of the cup holder and increases its efficiency. Additionally, the temperature sensor of the cup holder measures the temperature of the cup, not of the fluids held in the cup. This is a non-intrusive way to determine if the cup is empty or not. It further ensures the temperature sensor is not damaged by the fluids held in the cup, which reduces the costs associated with the maintenance of the circuit board of the cup holder, and ensures the simplicity of the design as the temperature sensor does not require to be robust in order to withstand repetitive contact with fluids.

### Brief Description of the Drawings

Fig. 1A-1B schematically illustrates an embodiment of a cup holder for holding a cup with fluids.
Fig. 2 schematically illustrates an embodiment of a cup holder for determining a fill level of the fluids of held in the cup.
Fig. 3 schematically illustrates an embodiment of a measurement of temperature of a cup holding warm fluids by the infra-red temperature sensor of the cup holder holding the cup.
Fig. 4 schematically illustrates an embodiment of the calculation of the slope of the temperature of the cup by the cup holder holding a cup holding warm fluids.
Fig. 5 schematically illustrates an embodiment of a cup holder comprising a position determining unit, a gyroscope and a wireless transmitter.

### Detailed Description of Embodiment(s)

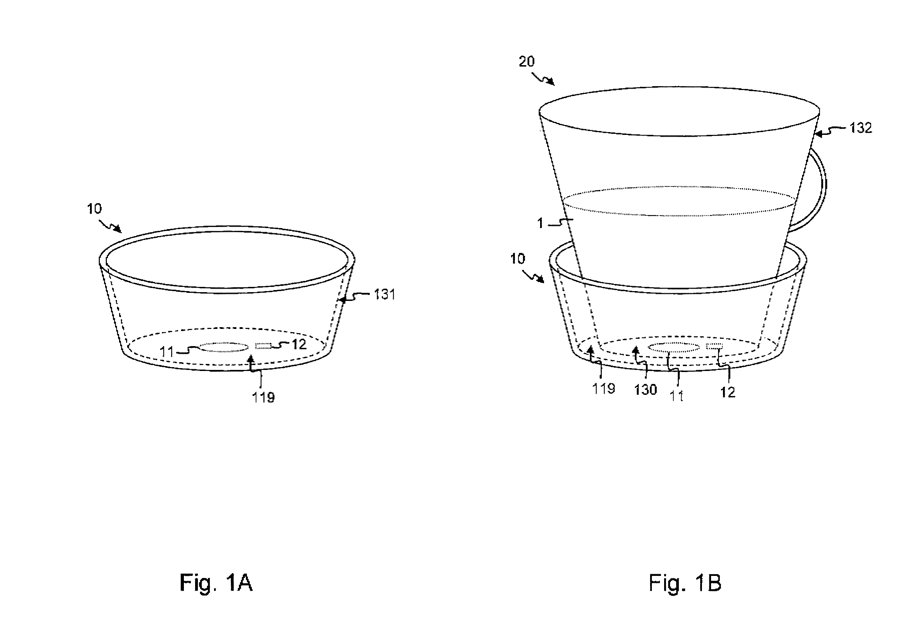

According to an embodiment shown in Fig. 1A, a cup holder 10 comprises an infra-red temperature sensor 11 and a data processing system 12. As visible in Fig. 1A, the cup holder 10 comprises a circular inner surface 119. According to an alternative embodiment, the cup holder 10 can be designed such that its inner surface 119 and/or its outer surface have any other suitable geometry, for example designed as a square, a rectangle, a triangle, etc. The infra-red temperature sensor 11 is integrated in the cup holder 10 such that the infra-red temperature sensor 11 is positioned in the middle of the circular inner surface 119 of the cup holder 10. The infra-red temperature sensor 11 is integrated in the cup holder 10 such that the temperature sensitive cell of the infra-red temperature sensor is pointing towards the inner surface 119 of the cup holder 10. This way, as visible in Fig. 1B, the cup holder 10 is designed such that the cup holder 10 can hold a cup 20, i.e. such that the bottom surface 130 of the cup 20 is in close contact with the inner surface 119 of the cup holder 10. The infra-red temperature sensor 11 is then positioned to measure the temperature of the cup 20. As visible in Fig. 1B, the cup holder 10 is not in close contact with the edges of the cup 20. According to an alternative embodiment, the cup holder 10 is holding the cup 20 in close contact at the side 132 of the cup 20. In other words, according to an alternative embodiment, the geometry of the inner surface 119 of the cup holder 10 matches the geometry of the bottom surface 130 of the cup 20 such that the edges 131 of the cup holder 10 are in close contact with the edges 132 of the cup 20. As visible in Fig. 1B, the cup 20 holds fluids 1. The fluids 1 depicted in Fig. 1B are warm fluids. According to an alternative embodiment, the fluids 1 are cold fluids. According to an alternative embodiment, the cup holder 10 is integrated in the cup 20, such that the infra-red temperature sensor is positioned at the bottom 130 of the cup 20 and measures the temperature 100 of the cup 20.

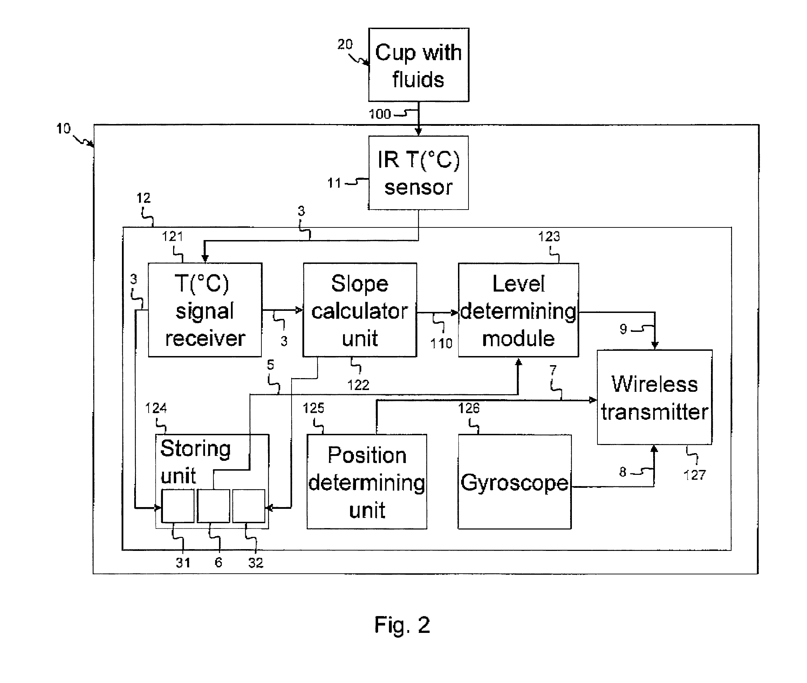

According to an embodiment shown in Fig. 2, a cup holder 10 comprises an infra-red temperature sensor 11 and a data processing system 12. The infra-red temperature sensor 11 measures the temperature 100 of a cup 20 that may comprise fluids. The temperature measurement is performed by the infra-red temperature sensor 11 with a sampling period which is comprised between 500 milliseconds and 10 seconds, preferably equal to 1 second, and which can be equal to 2 seconds, 3 seconds, 4 seconds, 5 seconds, etc. The infra-red temperature sensor 11 generates a temperature signal 3 from the temperature 100 and sends the temperature signal 3 to the data processing system 12. The data processing system 12 comprises a temperature signal receiver 121 adapted to receive the temperature signal 3 from the infra-red temperature sensor 11. The data processing system 12 further comprises a slope calculator unit 122, a level determining unit 123, a storing unit 124. The data processing unit 12 further optionally comprises a position determining unit 125, and/or a gyroscope 126 and/or a wireless transmitter 127. The temperature signal receiver 121 sends the temperature signal 3 to the slope calculator unit 122. The slope calculator unit 122 calculates a derivative of the temperature signal 3 and thereby generates a slope 110 of the temperature 100 of the cup 20. The slope calculator unit 122 calculates the slope 110 of the temperature 100 with a calculation periodicity 102 which is comprised between 500 milliseconds and 10 seconds, preferably equal to 1 second and which can be equal to 2 seconds, 3 seconds, 4 seconds, 5 seconds, etc, which may be equal to and/or synchronized with the sampling period. The slope calculator unit 122 sends every new calculation of the slope 110 of the temperature 100 of the cup 20 to the level determining module 123 which is adapted to determine from the slope 110 if the cup 20 is empty or not, i.e. if the cup 20 holds fluids or not. The storing unit 124 of the data processing system 12 receives the temperature signal 3 from the temperature signal receiver 121 and stores the values of temperature 100 of the cup 20 over time in a temperature table 31. The storing unit 124 of the data processing system 12 further receives the slope 110 from the slope calculator unit 122 and stores the values of slope 110 of the temperature 100 over time in a slope table 32. The storing unit 124 further comprises a predetermined table 6 of threshold values. The threshold values are determined during a calibration phase and are stored in the predetermined table 6 before the temperature 100 of the cup 20 under study is measured. The level determining module 123 retrieves one predetermined threshold 5 value from the predetermined table 6 of threshold values, corresponding to the material from which the cup 20 is fabricated. The level determining module 123 determines if the absolute value of the numerical value of the slope 110 has changed by an amount equal to or larger than the predetermined threshold 5 in order to determine a fill level of the cup 20. If this is the case, the level determining module 123 determines the cup 20 is empty and the fill level is then equal to empty. Optionally, the level determining unit 123 encodes this fill level determination in a fill level signal 9 and sends the fill level signal 9 to the wireless transmitter 127. The position determining unit 125 of the data processing system 12 is adapted to determine a position of the cup holder 10. Optionally, the position determining unit 125 encodes the position of the cup holder 10 in a position signal 7 and sends the position signal 7 to the wireless transmitter 127. The gyroscope 126 of the data processing system 12 is adapted to detect a movement of the cup holder. Optionally, the gyroscope 126 encodes the movement of the cup holder 10 in a movement signal 8 and sends the movement signal 8 to the wireless transmitter 127. The wireless transmitter 127 optionally encodes the fill level signal 9 and/or the location signal 7 and/or the movement signal 8 and transmits the fill level signal 9 and/or the location signal 7 and/or the movement signal 8. The wireless transmitter 127 transmits these signals via Bluetooth low energy, Wi-Fi and/or Global Positioning System. The level signal 9 and/or the location signal 7 and/or the movement signal 8 optionally comprise a Bluetooth low energy beacon with a universal identifier.

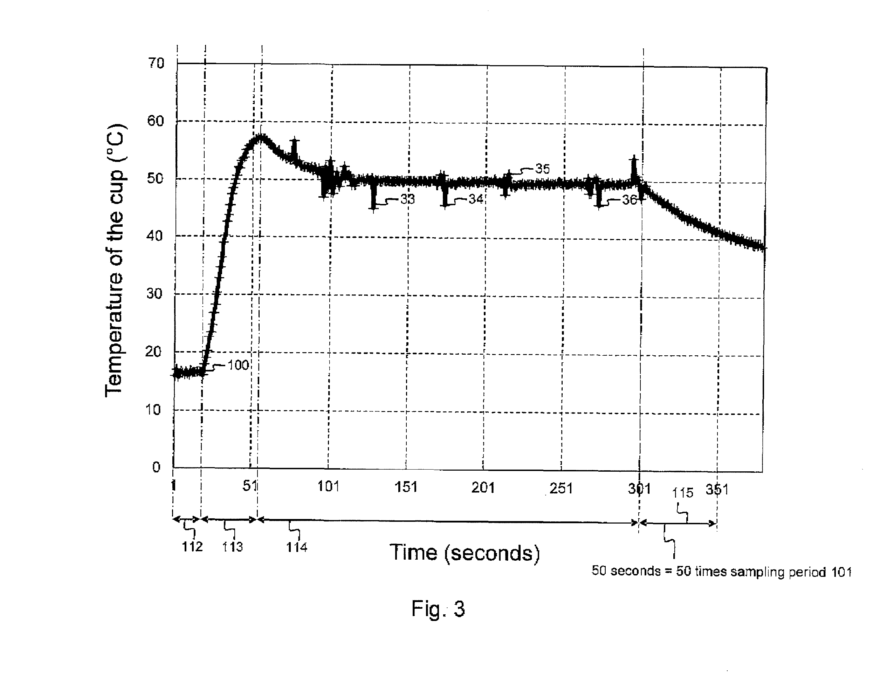

According to an embodiment shown in Fig. 3, the temperature 100 of the cup measured by the infra-red temperature sensor of the cup holder as described in the embodiments of Fig. 1A-1B and Fig. 2 is depicted as a function of time, in seconds. The temperature of the cup is measured in Celsius. According to an alternative embodiment, the temperature of the cup is measured in any other suitable unit for temperature, such as Fahrenheit, Kelvin, etc. The temperature 100 is measured with a sampling period 101 equal to 1 second. As visible in 3, the time period 115 is equal to 50 seconds, which is equal to 50 times the sampling period 101. In other words, 51 temperature points of the cup are measured between 301 seconds and 351 seconds. According to an alternative embodiment, the sampling period is comprised between 500 milliseconds and 10 seconds. As visible in Fig. 3, the first temperature point is measured at a time equal to 1 second. Over the time period 112, the cup does not hold any fluids. The temperature of the cup is the room temperature, in this case close to 16 degrees Celsius. Over the time period 113, a warm fluid is poured in the cup. The cup holding the warm fluids is warming up and the temperature 100 of the cup therefore increases over the time period 113 until it reaches a temperature close to 57 degrees Celsius. Over the time period 114, the warm fluids in the cup are cooling down, due to normal cooling of the fluids by conduction, convection and radiation and to the fact that the warm fluids are consumed by a user of the cup. The spikes 33, 34, 35 and 36 visible in the temperature 100 on Fig. 3 corresponds with instants at which a user of the cup consumes fluids from the cup, thereby reducing the volume of fluids in the cup. Over the time period 115, the temperature 100 decreases more rapidly that over the time period 114.

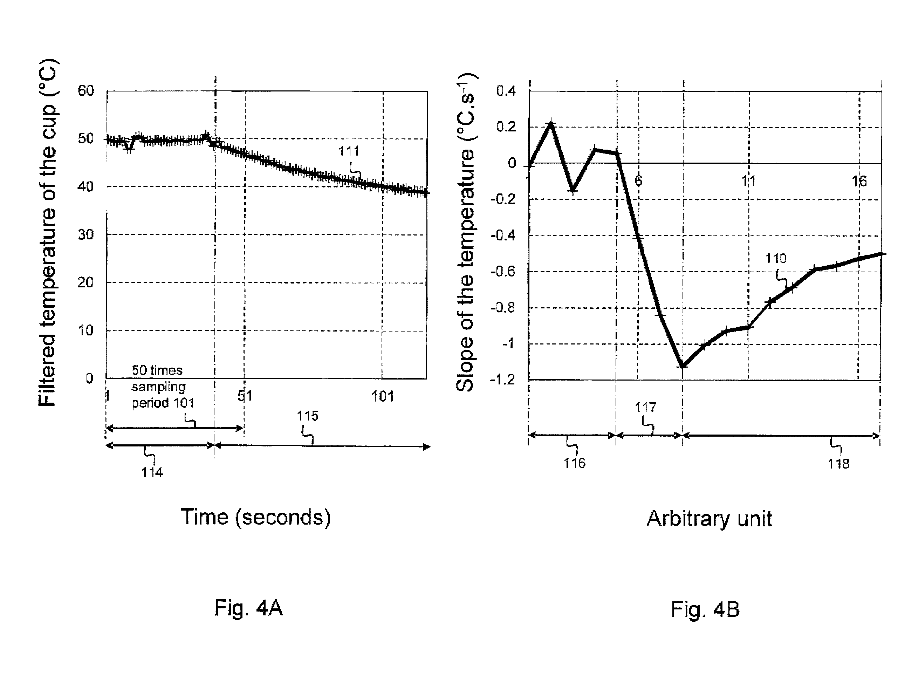

According to an embodiment shown in Fig. 4A, the values of the temperature of the cup measured by the infra-red temperature sensor are filtered, thereby generating a filtered temperature signal 111 of the temperature of the cup. The time scale depicted in Fig. 4A is a zoom-in on the time scale of 3. A lapse of the time period 114 and a lapse of the time period 115 are depicted in the timeline of Fig. 4A and are similar to the time periods 114 and 115 of Fig. 3. If the temperature of the cup measured at an instant t differs from the temperature that was measured a sampling period ago by the infra-red temperature sensor by +/- 1 degree Celsius, then the temperature of the cup measured at an instant t is not used by the data processing system to determine the fill level of the cup. If the temperature of the cup measured at an instant t is substantially equal to the temperature that was measured a sampling period ago by the infra-red temperature sensor, then the temperature of the cup measured at an instant t is used by the data processing system to determine the fill level of the cup. The filtered temperature 111 is then averaged over 5 temperature measurements, i.e. over 5 seconds, over the time periods 114 and 115 of Fig. 4A, thereby generating an averaged filtered temperature. The slope of the averaged filtered temperature is then calculated by calculating a ratio of the difference between two values of averaged filtered temperatures over the time in seconds which separates these two averaged filtered temperatures. For example, as the sampling period is equal to 1 second, the slope of the averaged filtered temperature is calculated by subtracting a value of averaged filtered temperature to the previous value of averaged filtered temperature. The slope is calculated with a calculation periodicity equal to 1 second. The slope is then averaged over 3 readings averaged filtered temperature. Fig. 4B depicts the slope 110 averaged, in degree Celsius per second, as a function of an arbitrary unit representative for the averaging of the slope. Over the period 116, the slope 110 of the temperature fluctuates around 0, which corresponds to a constant temperature. Over the period 117, the absolute value of the numerical value of the slope 110 increases. At the junction between the periods 117 and 118, the absolute value of the numerical value of the slope 110 is twice consecutively larger than 0.5, which is the predetermined threshold for the embodiment of Fig. 3. As two readings of the absolute value of the numerical value slope 110 are larger than the predetermined threshold, the cup holder determines the cup is empty. This ensures the cup holder from signaling a false empty. Alternatively, the cup holder determines the cup is empty based on one reading of the absolute value of the numerical value slope 110.

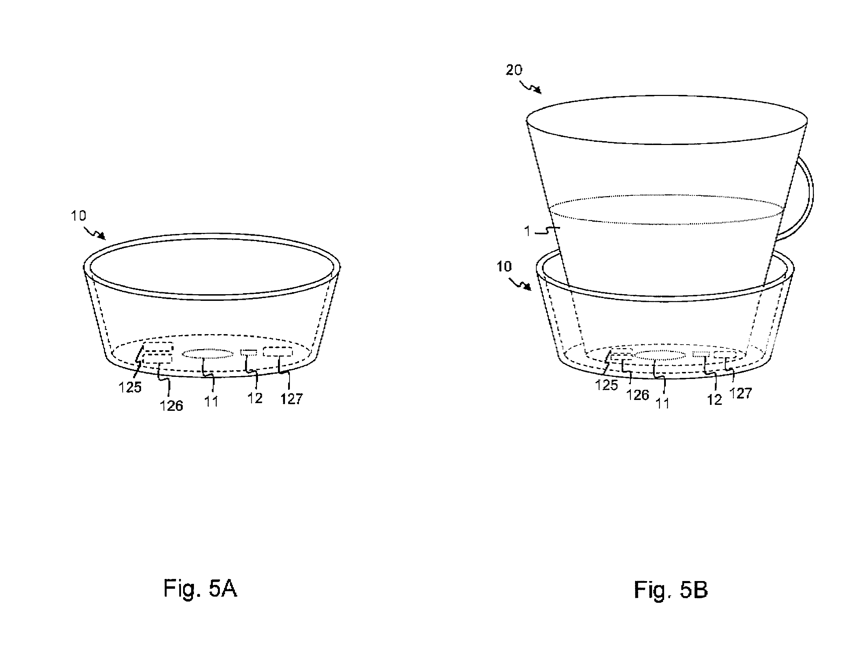

According to an embodiment shown in Fig. 5A and 5B, the cup holder comprises an infra-red temperature sensor 11 and a data processing system 12, and optionally comprises a position determining unit 125, and/or a gyroscope 126 and/or a wireless transmitter. Components having identical references as components of Fig. 1A and Fig. 1B and Fig. 2 perform the same function.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A cup holder (10) for holding a cup (20) with fluids (1), said cup holder (10) comprising:
- an infra-red temperature sensor (11), adapted to measure the temperature (100) of said cup (20) and to generate a temperature signal (3) comprising information indicative for said temperature (100) over a time period; and
- a data processing system (12) comprising:
- a temperature signal receiver (121), adapted to receive said temperature signal (3) from said infra-red temperature sensor (11);
- a slope calculator unit (122), adapted to calculate a derivative (30) of said temperature signal (3), thereby generating a slope (110) of said temperature (100); and
- a level determining module (123), adapted to determine from said slope (110) a fill level (4) of said cup (20).

2. A cup holder (10) according to claim 1, wherein said level determining module (123) is further adapted to determine that said cup (20) is empty when the absolute value of said slope (110) is changing with an amount equal to or larger than a predetermined threshold (5).

3. A cup holder (10) according to claim 2, wherein said infra-red temperature sensor (11) is adapted to measure said temperature (100) of said cup (20) with a sampling period (101) comprised between 500 milliseconds and 10 seconds.

4. A cup holder (10) according to claim 3, wherein said slope calculator unit (122) is adapted to calculate a derivative (30) of said temperature signal (3) with a calculation periodicity (102) comprised between 500 milliseconds and 10 seconds.

5. A cup holder (10) according to claim 4, wherein said data processing system (12) further comprises a storing unit (124) adapted to store:
- said temperature (100) of said cup in a temperature table (31) with said sampling period (101); and
- said slope (110) of said temperature (100) in a slope table (32) with said calculation periodicity (102).

6. A cup holder (10) according to claim 4, wherein:
- said storing unit (124) is further adapted to store a predetermined table (6) of threshold values; and
- said predetermined threshold (5) is retrieved from said predetermined table (6).

7. A cup holder (10) according to claim 4, wherein said calculation periodicity (102) and said sampling period (101) are substantially equal.

8. A cup holder (10) according to claim 1, wherein said cup holder (10) comprises only one infra-red temperature sensor (11) and no other sensor.

9. A cup holder (10) according to claim 1, wherein said cup holder (10) further comprises:
- a position determining unit (125), adapted to determine a position of said cup holder (10) and to generate a position signal (7); and
- a gyroscope (126), adapted to detect a movement of said cup holder (10) and to generate a movement signal (8) comprising information indicative for said movement.

10. A cup holder (10) according to claim 1, wherein said cup holder (10) further comprises a wireless transmitter (127), adapted to encode and transmit said fill level (4) in a fill level signal (9).

11. A cup holder (10) according to claim 10, wherein said wireless transmitter is further adapted to encode and transmit said fill level signal (9), and/or said location signal (7), and/or said movement signal (8).

12. A cup holder (10) according to claim 10, wherein:
- said wireless transmitter (127) is a Bluetooth low energy transmitter; and
- said fill level signal (9), and/or said location signal (7), and/or said movement signal (8) comprise at least one Bluetooth low energy beacon with a universal unique identifier.

13. A cup holder (10) according to claim 1, wherein said cup holder (10) is further adapted to be integrated in said cup (20).

14. A method for determining a fill level (4) of a cup (20), said method comprising the steps of:
- measuring the temperature (100) of said cup (20);
- generating a temperature signal (3) containing information indicative for said temperature (100) over a time period;
- calculating a derivative (30) of said temperature signal (3), thereby generating a slope (110) of said temperature (100); and
- determining said fill level (4) of said cup (20) from said slope (110).
